# EUROPEAN PATENT SPECIFICATION

(11) **EP 2 595 089 B1**
(45) Date of publication and mention of the grant of the patent: **16.07.2014**
(21) Application number: 11189364.0
(22) Date of filing: 16.11.2011
(51) Int. Cl.: G06K 9/00, G06T 7/00, B60W 30/00

(54) **Driver assistance system and method for a motor vehicle**
Fahrerhilfssystem und Verfahren für ein Motorfahrzeug
Système d'assistance au conducteur et procédé pour véhicule à moteur

(43) Date of publication of application: 22.05.2013
(73) Proprietor: Autoliv Development AB, 447 83 Vårgårda (SE)
(72) Inventor: Lundmark, Astrid, 58750 Linköping (SE)
(74) Representative: Müller Verweyen

(56) References cited:
- EP-A2- 2 172 873
- GB-A- 2 305 503
- US-A1- 2007 182 528
- US-A1- 2009 033 540

## Description

The invention relates to a driver assistance system and method.

Detection of objects, in particular of pedestrians, at short distances is important for example for driver assistance systems like automatic braking, or pedestrian protection like pedestrian airbags. For such applications, the detection of objects at larger distances may cause some problems. For example, measures must be taken such that false detections of objects at longer distances do not cause braking or triggering of pedestrian airbags by mistake. Furthermore, image processing of objects at larger distances requires processing power which necessarily reduces the efficiency and speed of the detection of objects at short distances.

Different solutions are known in the art to cope with this problem.

When using a camera having a long range, objects which are relatively far away can be sorted out using image processing. However, the unnecessary detection and sorting out of objects at larger distances means a waste of processing power and a higher risk of erroneous decisions.

The focus of the camera may be adjusted to a short distance, such that the camera becomes near-sighted. In such an embodiment, objects at far distances become blurred, making them less likely to be detected by the image processing. Nevertheless, also in this case the unnecessary detection and sorting out of objects at larger distances means a waste of processing power and a higher risk of erroneous decisions.

Computational photography techniques can estimate the distance to objects. Coded aperture has an option to assess distances. However, such novel techniques require specific hardware and processing the development of which is cost intensive.

Active systems emitting radiation in the wavelength band where the camera is sensitive accentuate objects that are close over those which are far away. However, in daylight, ambient light originating from the sun will dominate over the light emitted from the vehicle.

US 2009/0033540 A1 discloses a driver assistance system for a motor vehicle with an optical detection device operating at a 1.5 micron wavelength. US 2007/0182528 A1 discloses a similar driver assistance system with an optical detection device operating at a wavelength below 5 microns, or more than 10 microns where sun radiation is significantly attenuated.

The problem underlying the present invention is to provide a cost-effective driver assistance system and method enabling a reliable detection of objects at short distances with reduced processing resources.

The invention solves this problem with the features of the independent claims. By pre-setting the maximum sensivity of the optical imaging device to a wavelength where the transmittance in air is significantly lower than at a maximum transmission wavelength in the same order of magnitude wavelength range, objects at larger distances get a low contrast and therefore become unlikely to be detected by the image processing algorithms. "Significantly lower" in particular means a transmittance, relative to said maximum transmittance in the same order of magnitude wavelength range, of less than 90%, preferably less than 80%, more preferably less than 70% and still more preferably less than 60% over a length of 10 m in air. The maximum transmission wavelength in the same order of magnitude wavelength range is the wavelength in a range between 0.1 and 10 times the wavelength under consideration which has a maximum transmittance in air. This will be explained in more detail later.

As a consequence of the invention, the image processing algorithms are able to focus directly on relatively close objects, the image quality of which is hardly influenced. The invention uses the atmospheric attenuation, which is usually regarded as a source of error reducing the image quality, to its advantage. Being based on the principle of light attenuation in the atmosphere, the invention provides an inherently reliable short-range imaging device without consuming additional processing resources. Since hardware changes to the optical imaging device for pre-setting the maximum sensivity to the desired wavelength are small, the invention provides a very cost-effective solution to the above mentioned problem.

Preferably the invention is realized by pre-setting the sensitivity of an imaging sensor in said imaging device to the desired wavelength range. In particular, the imaging sensor may preferably be a microbolometer tuned to the desired wavelength range. However, the invention is not restricted accordingly. Alternatively, for example, a filter device pre-set to the desired wavelength range may be used.

According to the invention the maximum sensitivity of the optical imaging device is pre-set to a low transmission band below 8 µm, namely in the range between 5 µm and 8 µm. In this region there is significant radiation attenuation in the atmosphere and still sufficient emission of objects to be detected, for example pedestrians. Furthermore, cost-effective microbolometers can be practically realized in this range.

Preferably the maximum sensitivity of the imaging device is pre-set such that the system is adapted to detect objects up to a distance of not more than 15 m, preferably not more than 12 m, more preferably up to a distance of about 10 m based on images of said imaging device. In these short distance ranges it is most important to detect objects like pedestrians in order to avoid a collision or take appropriate action.

In an embodiment of the invention, an illumination device with a maximum emission wavelength adapted to the maximum sensitivity of said optical imaging device may be provided in order to enhance the contrast of the images taken by the optical imaging device.

In the following the invention shall be illustrated on the basis of preferred embodiments with reference to the accompanying drawings, wherein:

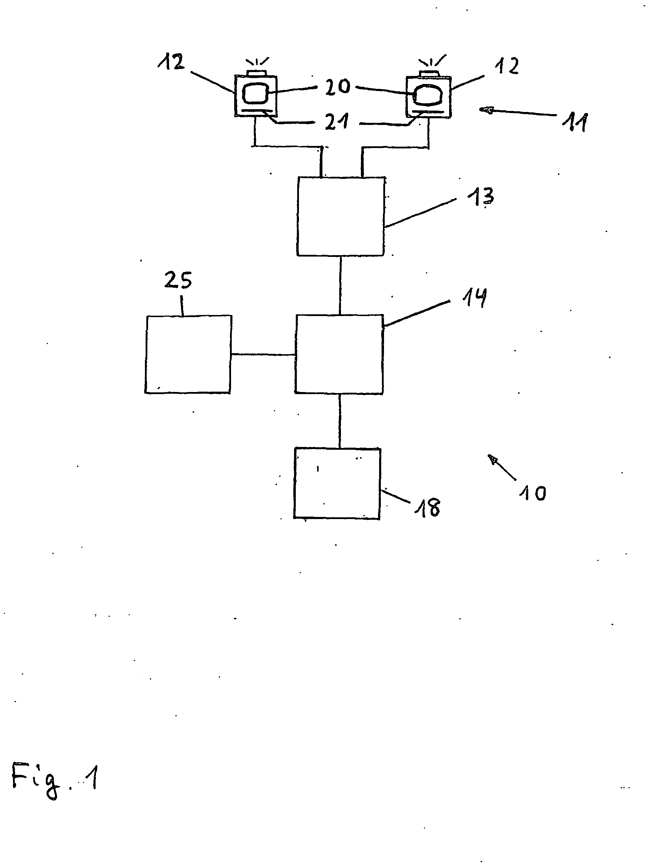

- Fig. 1: shows a schematic view of a driver assistance system for a motor vehicle;
- Fig. 2: shows an optical transmission spectrum of the earth's atmosphere;
- Fig. 3: shows the spectral radiance of a 27°C warm object; and
- Fig. 4: shows a schematic view of a driver assistance system for a motor vehicle in another embodiment.

The safety/vision system 10 is mounted in a motor vehicle and comprises an imaging means 11 for acquiring images of a region surrounding the motor vehicle, for example a region in front of the motor vehicle. Preferably the optical imaging means 11 operates mainly in the visible and/or the infrared region, where infrared covers near IR with wavelengths between 0.75 and 5 microns and/or far IR with wavelengths beyond 5 microns. Preferably the imaging means 11 comprises a plurality imaging devices 12 in particular forming a stereo imaging means 11; alternatively only one imaging device 12 forming a mono imaging means can be used. A stereo system providing distance information may be advantageous in order to sort out spurious matches on distant objects by image processing. The imaging device 12 may in particular be an infrared camera.

Each camera 12 comprises an optics arrangement 20 and an image sensor 21, in particular a microbolometer, operating in particular an the infrared range, provided to convert incident infrared radiation transmitted through the camera 12 into an electrical signal containing image information of the recorded scene. The image sensor 21 is preferably a two-dimensional sensor, but it may also be for example a one-dimensional sensor for image scanning.

The imaging means 11 may be coupled to an image pre-processor 13 adapted to control the capture of images by the imaging means 11, receive the electrical signal containing the image information from the imaging means 11, warp pairs of left/ right images into alignment and/or create disparity images, which per se is known in the art. The image pre-processor 13 may be realized by a dedicated hardware circuit, for example a Field Programmable Gate Array (FPGA). Alternatively the pre-processor 13, or part of its functions, can be realized in the electronic processing means 14. In particular in case of a vision system using only one camera 12 the pre-processor 13 is not needed.

The image data or pre-processed image data are provided to an electronic processing means 14 where image and data processing is carried out by corresponding software. In particular, the image and data processing in the processing means 14 comprises the following functions: identification and classification of possible objects surrounding the motor vehicle, such as pedestrians, other vehicles, bicyclists or large animals; tracking over time the position of identified object candidates in the recorded images; calculation of a collision probability between the vehicle and a detected object; and/or activation or control of at least one driver assistance and/or safety means 18 depending on the result of the object detection and tracking processing and/or said collision probability calculation. The driver assistance and/or safety means 18 may in particular comprise a display means for displaying information relating to a detected object. However, the invention is not limited to a display means. The driver assistance and/or safety means 18 may in addition or alternatively comprise a warning means adapted to provide a collision warning to the driver by suitable optical, acoustical and/or haptical warning signals; one or more restraint systems such as occupant airbags or safety belt tensioners, pedestrian airbags, hood lifters and the like; and/or dynamic vehicle control systems such as brakes or steering means. The processing means 14 expediently has access to a memory means 25.

The electronic processing means 14 is preferably programmed or programmable and expediently comprises a microprocessor or micro-controller. The electronic processing means 14 can preferably be realized in a digital signal processor (DSP). The image pre-processor 13, the electronic processing means 14 and the memory means 25 are preferably realised in at least one on-board electronic control unit (ECU) and may be connected to the imaging means 11 via a separate cable or a vehicle data bus. In another embodiment an ECU and one or more of the imaging devices 12 can be integrated into a single unit, where a one box solution including an ECU and all imaging devices 12 may be preferred. All steps from imaging, image pre-processing, image processing to activation or control of driver assistance and/or safety means 18 are performed automatically and continuously during driving in real time.

The sensitivity of each imaging device 12 is pre-set to a suited wavelength range for detecting objects in a distance up to about 10 meters. In other wavelength bands where the transmission in air is high the sensitivity of the imaging device 12 is set low. Consequently, objects which are farther away have a reduced image quality such that they are unlikely to be detected by the image processing algorithms in the processing means 14. Preferably the invention is realized by pre-setting the sensitivity of the imaging sensor 21 in each imaging device 12 to the desired wavelength range. This may be achieved in any suited manner, for example by electrically tuning a microbolometer with a conventional IR absorbing layer to the desired wavelength range, or using a new microbolometer with a dedicated IR absorbing layer designed for optimum performance in the desired wavelength range. However, the invention is not restricted to image sensors 21 adjusted to the desired wavelength range. Alternatively, for example, a filter device arranged for example in the optics arrangement 20 can be used for pre-setting the imaging device 12 to the desired wavelength range.

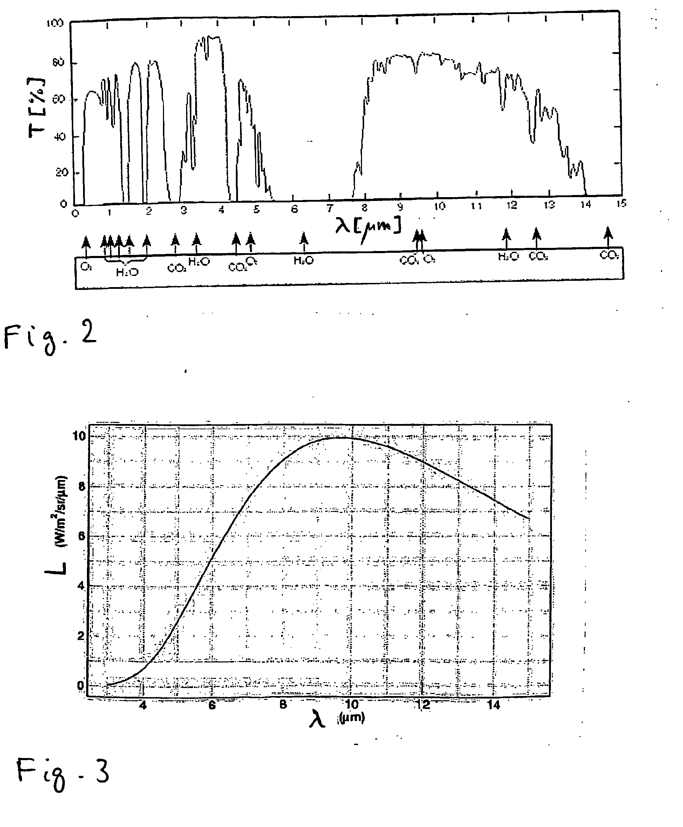

The suited wavelength range to be chosen for the imaging devices 12 may be explained on the basis of Figures 2 and 3. Fig. 2 shows the optical transmittance T through the earth's atmosphere in a part of the infrared region up to 15 µm. It should be noted that Fig. 2 relates to an absorption length of the order of tens of kilometers corresponding to the whole earth's atmosphere, whereas the present case involves absorption lengths of the order of 100 m. Nevertheless the basic principle can be well understood from Figure 2.

In the range between 7 µm or 8 µm and about 12 µm or 14 µm lies a pronounced atmospheric transmission window where most of the infrared radiation is transmitted and in the present application there is no significant absorption of the infrared radiation in air. This region is regarded as ideal in the prior art for imaging of a vehicle environment because the image quality is not deteriorated by light absorption in air. Consequently, image sensors for vehicle based IR cameras usually operate in the wavelength band between 8 µm and 12 µm or 14 µm.

According to the invention, the image sensor 21 of the imaging device 12 intentionally operates in a lower transmission range between 5 µm and 8 µm. In this range the transmittance of the IR radiation in air is significantly reduced as can be seen in Figure 2. Consequently, the IR radiation from objects up to 10 m in front of the imaging devices 12 are much less influenced by absorption in the environmental air than objects farther away than about 10 m in front of the imaging devices 12. Therefore, objects up to about 10 m in front of the imaging devices 12 can be detected in the processing means 14 with higher speed, higher reliability and less processing efforts.

On the other hand, the emission from objects to be detected, in particular for example pedestrians, is still sufficiently high in the wavelength range between 5 µm and 8 µm. This is evident from Figure 3 showing the radiance L of a 27 °C black body in a part of the infrared region up to 15 µm.

Finally it shall be explained how a wavelength under consideration can be determined as having a wavelength where the transmittance in air is significantly lower than at a maximum transmission wavelength in the same order of magnitude wavelength range, or not. As a first example a conventional wavelength of 10 µm is considered. This has a certain transmittance over a length of 10 m in air, which is in fact very close to 100 % (remembering that Fig. 2 shows the transmittance for an absorption length of tens of km). The same order of wavelength range is the wavelength range between 1 µm and 100 µm. In this range the maximum transmission wavelength is around 4 µm with a transmittance over a length of 10 m in air also very close to 100 %. Therefore, the transmittance over a length of 10 m at 10 µm is only marginally less than the corresponding transmittance at 4 µm. Consequently an imaging wavelength of 10 µm does not fall under the invention.

As a further example a wavelength of 6.5 µm is considered. This has a certain transmittance over a length of 10 m in air, which is in fact not zero as shown in Figure 2 but in any case less than 90 %. The same order of wavelength range is the wavelength range between 0.65 µm and 65 µm. In this range the maximum transmission wavelength is again around 4 µm with a transmittance over a length of 10 m in air very close to 100 %. Therefore, the transmittance over a length of 10 m at 6.5 µm is significantly less than the corresponding transmittance at 4 µm. Consequently an imaging wavelength of 6.5 µm does fall under the invention.

The relation of the transmittance at a wavelength under consideration to the transmittance at a maximum transmission wavelength in the same order of magnitude wavelength range, instead of simply relating it to the transmittance at 4 µm, allows it to transfer the invention to other spectral regions, for example cameras operating in the visible region.

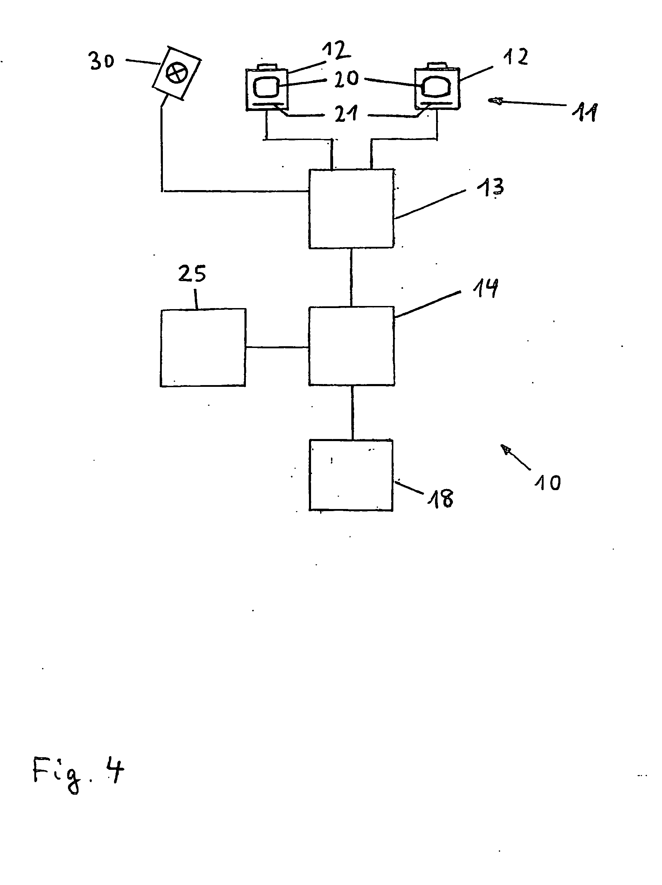

An alternative embodiment of a driver assistance system 10 is shown in Figure 4. In this embodiment the driver assistance system 10 comprises an illumination means 30, for example an SWIR light, controlled by the processing means 14 to illuminate essentially the region viewed by the imaging means 11. This means that the illumination means 30 is a near range illumination means preferably adapted to illuminate the vehicle surrounding up to a distance of 15 m, preferably 12 m, more preferably 10 m. This may involve a steeper pitch angle of the illumination means 30 compared to conventional IR illumination devices. The maximum emission wavelength of the illumination device 30 is adapted to the maximum sensitivity of the imaging device 12 and may for example be in the preferred range between 5 µm and 8 µm.

It may be advantageous to use a modulated illumination device 30 adapted to generate modulated light. In such systems, short range cameras 12 using low transmission band wavelengths can increase the signal-to-noise ratio in particular at daylight because radiation from the sun can be highly attenuated.

## Claims

1. A driver assistance system (10) for a motor vehicle, comprising at least one optical imaging device (12) adapted to take images of a region surrounding a motor vehicle, a processing means (14) adapted to perform image processing of images taken by said imaging device (12), and a driver assistance and/or safety means (18) controlled by said processing means (14) depending on said image processing, **characterized in that** the maximum sensitivity of said optical imaging device (12) is pre-set to the wavelength range between 5 µm and 8 µm.

2. A driver assistance system as claimed in any one of the preceding claims, comprising at least one illumination device (30) with a maximum emission wavelength adapted to the maximum sensivity of said imaging device (12).

3. A driver assistance system as claimed in claim 2, wherein said illumination device (30) is arranged to illuminate mainly a vehicle surrounding area corresponding to the area imaged by said imaging device (12).

4. A driver assistance system as claimed in claim 2 or 3, wherein said illumination device (30) comprises a modulated light source.

5. A driver assistance method for a motor vehicle, comprising using an optical imaging device (12) for taking images of a region surrounding a motor vehicle, performing image processing of images taken by said imaging device (12), and controlling a driver assistance and/or safety means (18) depending on said image processing, **characterized by** pre-setting the maximum sensitivity of said optical imaging device (12) to the wavelength range between 5 µm and 8 µm.

## Patentansprüche

1. Fahrerassistenzsystem (10) für ein Kraftfahrzeug, umfassend wenigstens ein optisches Bilderfassungsgerät (12), das zur Aufnahme von Bildern einer ein Kraftfahrzeug umgebenden Region angepasst ist, ein Verarbeitungsmittel (14), das zur Durchführung einer Bildverarbeitung von Bildern angepasst ist, die mit dem Bilderfassungsgerät (12) aufgenommenen werden, und ein Fahrerassistenz- und/oder Sicherheitsmittel (18), das in Abhängigkeit von der Bildverarbeitung durch das Verarbeitungsmittel (14) gesteuert wird, **dadurch gekennzeichnet, dass** die maximale Sensivität des optischen Bilderfassungsgeräts (12) auf den Wellenlängenbereich zwischen 5 µm und 8 µm voreingestellt ist.

2. Fahrerassistenzsystem nach einem der vorhergehenden Ansprüche, umfassend wenigstens eine Beleuchtungseinrichtung (30) mit einer maximalen Emissionswellenlänge, die an die maximale Sensivität des Bilderfassungsgeräts (12) angepasst ist.

3. Fahrerassistenzsystem nach Anspruch 2, bei dem die Beleuchtungseinrichtung (30) hauptsächlich zur Beleuchtung eines ein Fahrzeug umgebenden Bereichs angeordnet ist, der mit dem Bereich übereinstimmt, der mit des Bilderfassungsgeräts (12) abgebildet wird.

4. Fahrerassistenzsystem nach Anspruch 2 oder 3, bei dem die Beleuchtungseinrichtung (30) eine modulierte Lichtquelle umfasst.

5. Fahrerassistenzverfahren für ein Kraftfahrzeug, umfassend die Verwendung eines optischen Bilderfassungsgeräts (12) zur Aufnahme von Bildern einer ein Kraftfahrzeug umgebenden Region, die Durchführung einer Bildverarbeitung von Bildern, die mit dem Bilderfassungsgerät (12) aufgenommen werden, und die Steuerung eines Fahrerassistenz- und/oder Sicherheitsmittels (18) in Abhängigkeit von der Bildverarbeitung, **dadurch gekennzeichnet, dass** die maximale Sensivität des optischen Bilderfassungsgeräts (12) auf den Wellenlängenbereich zwischen 5 µm und 8 µm voreingestellt wird.

## Revendications

1. Système d'assistance au conducteur (10) pour un véhicule moteur comprenant au moins un dispositif d'imagerie optique (12) adapté pour prendre des images d'une zone périphérique d'un véhicule moteur, un moyen de traitement (14) adapté pour effectuer un traitement des images prises par ledit dispositif d'imagerie (12) et une assistance au conducteur et/ou un moyen de sécurité (18) contrôlé par ledit moyen de traitement (14) en fonction dudit traitement d'images, **caractérisé en ce que** la sensibilité maximale dudit dispositif d'imagerie optique (12) est préréglée à la gamme de longueurs d'onde comprise entre 5 µm et 8 µm.

2. Système d'assistance au conducteur selon l'une quelconque des revendications précédentes, comprenant au moins un dispositif d'éclairage (30) avec une longueur d'onde maximale d'émission adaptée à la sensibilité maximale dudit dispositif d'imagerie (12).

3. Système d'assistance au conducteur selon la revendication 2, dans lequel ledit dispositif d'éclairage (30) est disposé pour éclairer principalement une zone périphérique d'un véhicule correspondant à la zone observée par ledit dispositif d'imagerie (12).

4. Système d'assistance au conducteur selon la revendication 2 ou 3, dans lequel ledit dispositif d'éclairage (30) comprend une source de lumière modulée.

5. Procédé d'assistance au conducteur pour un véhicule moteur, comprenant l'utilisation d'un dispositif d'imagerie optique (12) pour prendre des images d'une zone périphérique d'un véhicule moteur, la réalisation d'un traitement des images prises par ledit dispositif d'imagerie (12) et le contrôle d'une assistance au conducteur et/ou d'un moyen de sécurité (18) en fonction dudit traitement d'images, **caractérisé par** le préréglage de la sensibilité maximale dudit dispositif d'imagerie optique (12) à la gamme de longueurs d'onde comprise entre 5 µm et 8 µm.
